# EUROPEAN PATENT APPLICATION

(11) **EP 3 613 818 A1**
(43) Date of publication of application: **26.02.2020**
(21) Application number: 18190041.6
(22) Date of filing: 21.08.2018
(51) Int. Cl.: C09J 7/29

(54) **MULTILAYER ADHESIVE TAPE**

(71) Applicant: Illinois Tool Works Inc., Glenview, IL 60025 (US)
(72) Inventor: VERHOEF, Peter, Glenview, IL Illinois 60025 (US); ZEGERS, Richard, Glenview, IL Illinois 60025 (US)
(74) Representative: HGF Limited

(57) **Abstract**

Described herein is an an adhesive tape (10), in particular for use on floors or walls, said tape comprising a lower masking layer (14) including an upper face (14a) and a lower face (14b) which is covered by a first adhesive layer (16), characterized in that it further comprises at least one upper masking layer (18) onto said lower masking layer, said at least one upper masking layer including an upper face (18a) and a lower face (18b) which is linked to the upper face of said lower masking layer by means of a second adhesive layer (20), said second adhesive layer extending in an area which is lower than the area of the upper face of said lower masking layer and/or the area of the lower face of said upper masking layer.

## Description

### Field of the invention

The present invention relates to improvements in or relating to an adhesive tape in particular for its use on floors or walls to be coated.

### Background of the invention

Adhesive tapes are commonly used in the building field for instance to mask and protect portions of a support which has to be coated. Prior to apply a coating, such as an epoxy or polyurethane resin, onto the support, the masking tape is applied to protect the underneath surface from this coating.

In the prior art, prior to every single applied coating, a standard masking tape is used. This standard masking tape comprises a single masking layer and a single adhesive layer. For every, second and third layer of coating, the former tape is removed and a new one is applied. This means substantial costs of labour and material.

### Summary of the invention

It is therefore an object of the present invention to provide an adhesive tape which solves the above problem.

In accordance with one aspect of the present invention, there is provided an adhesive tape, in particular for use on floors or walls, said tape comprising a lower masking layer including an upper face and a lower face which is covered by a first adhesive layer, characterized in that it further comprises at least one upper masking layer onto said lower masking layer, said at least one upper masking layer including an upper face and a lower face which is linked to the upper face of said lower masking layer by means of a second adhesive layer, said second adhesive layer extending in an area which is lower than the area of the upper face of said lower masking layer and/or the area of the lower face of said upper masking layer.

The tape according to the invention is a multilayer masking tape allowing the installation of a coated support to be processed in a much quicker and thus more economical, cost effective way. Instead of applying two or three times the same tape over the whole length of the surface, this multilayer tape only needs to be applied once. Prior to every new layer of coating, one layer of the existing masking tape can be removed. The operator does not have to apply a masking tape two or three times over again, but only one and remove a single layer of tape after every layer coating. All without using additional tools.

In the present disclosure, "masking" should be understood as having a general meaning and as being similar to "protect" or "cover".

The adhesive tape may be of the endless type and can be in the form of a roll.

The adhesive tape is preferably made of a soft and/or flexible material. Its masking layers have preferably a thickness in the range 0,01 mm-0,5mm, preferably in the range 0,02mm-0,2mm, and more preferably in the range 0,045mm-0,175mm. Its adhesive layers have preferably a thickness in the range 0,01mm-1mm, preferably in the range 0,02mm-0,5mm, and more preferably in the range 0,045mm-0,25mm.

The adhesive tape according to the invention may include one or more of the following features, which can be used in independently one another or in combination one another:
- said second adhesive layer extends in an area which is lower than the areas of the upper face of said lower masking layer and of the lower face of said upper masking layer;
- said lower masking layer and each of said at least one upper masking layer have identical widths;
- said lower masking layer and said at least one upper masking layer are identical;
- said first and second adhesive layers have the same composition;
- said first adhesive layer extends on the whole area of a the lower face of the lower masking layer;
- said first and second adhesive layers are each in the form of a continuous strip, said second adhesive layer having a width lower than a width of the first adhesive layer and/or the lower masking layer and/or said at least one upper masking layer;
- said second adhesive layer extends along a first longitudinal edge of said at least one upper masking layer and is remote from an opposite longitudinal edge of said at least one upper masking layer;
- the adhesive tape includes a top masking layer onto said at least one upper masking layer, said top masking layer including an upper face and a lower face which is linked to the upper face of said at least one upper masking layer by means of a top adhesive layer, said top adhesive layer extending in an area which is lower than the area of the upper face of said at least one upper masking layer and/or the area of the lower face of said top masking layer;
- each of said at least one upper masking layer and said top masking layer have identical widths;
- each of said at least one upper masking layer and said top masking layer are identical;
- said first, second and top adhesive layers are each in the form of a continuous strip, said top adhesive layer having a width lower than width(s) of the first and second adhesive layers and/or the lower masking layer and/or said at least one upper masking layer;
- said top adhesive layer extends along a first longitudinal edge of said top masking layer and is remote from an opposite longitudinal edge of said top masking layer;
- said first, second and third adhesive layers have the same composition;
- the adhesive tape is in the form of a roll, said first adhesive layer being in contact with an uppermost masking layer of the tape.

In accordance with another aspect of the present invention, there is provided a method for using the adhesive tape as described above, wherein it comprises the steps of: (i) sticking the adhesive tape onto a support, and in particular on a floor or a wall, by means of the first adhesive layer, said adhesive tape being used to define an area of the support to be coated by at least two successive coatings, (ii) coating said area of the support with a first coating, (iii) remove an uppermost masking layer of the tape, (iv) coating said area of the support with a second coating, and (v) remove an underneath masking layer of the tape.

Advantageously, said adhesive tape is used to define an area of the support to be coated by three successive coatings, and wherein it further includes the steps of: (vi) coating said area of the support with a third coating, and (vii) remove said lower masking layer of the tape.

### Brief description of the drawings

For a better understanding of the present invention, reference will now be made, by way of example, to the accompanying drawings in which:-
Figure 1 is a schematic perspective view of a roll of adhesive tape according an embodiment of the invention;
Figure 2 is a schematic perspective view of a roll of adhesive tape according another embodiment of the invention;
Figure 3 is a schematic cross sectional view of an adhesive tape according to the prior art;
Figures 4a to 4g are schematic cross sectional views of adhesive tapes according to embodiments of the invention;
Figures 5a is a schematic view of the lower face of a lower masking layer of an adhesive tape according to the invention;
Figures 5b is a schematic view of the lower face of an upper or top masking layer of an adhesive tape according to the invention;
Figure 6 illustrates a schematic block diagram of a method in accordance with the present invention.

### Description of the invention

The present invention will be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes.

The present invention relates to an adhesive tape, in particular for use on a floor or a wall which for instance has to be coated with a coating. The adhesive tape is then used as a masking tape to protect predetermined area of the floor or the wall which should not be coated with the coating.

A more concrete example would be the coating of the whole surface of a floor by means of a paint. The adhesive tape is stuck onto the bottom ends of walls, all around the floor surface, so as to protect the walls from the paint to be applied.

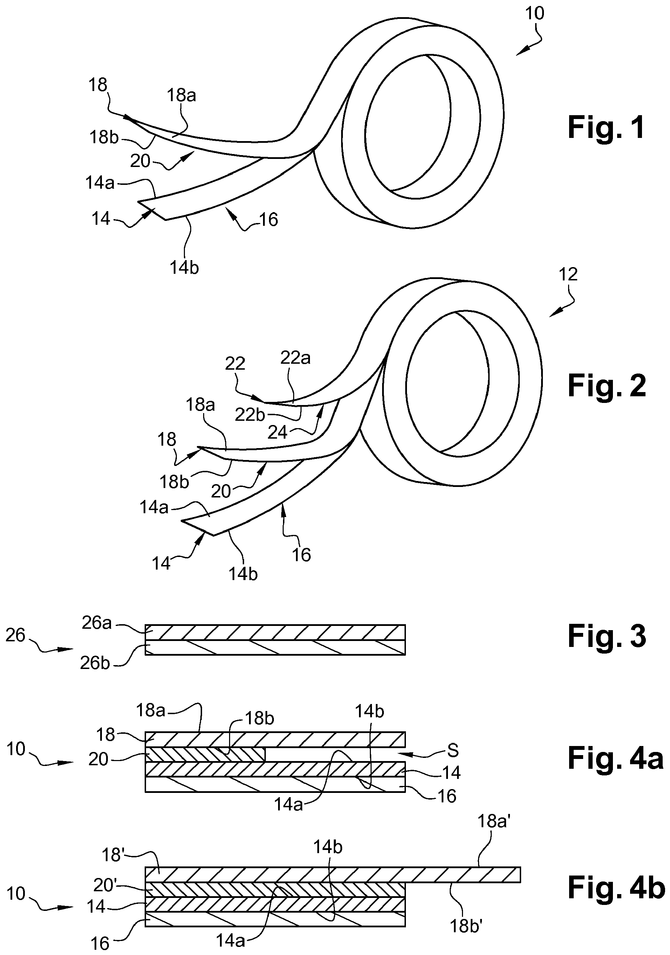

As shown in figures 1 and 2, the adhesive tape according to the invention is preferably in the form of a roll. Figures 1 and 2 illustrate two embodiments of the adhesive tape.

Figure 1 illustrates a roll of adhesive tape 10 which comprises two superimposed masking layers.

Figure 2 illustrates a roll of adhesive tape 12 which comprises three superimposed masking layers.

The invention concerns therefore an adhesive tape having more than one masking layer.

The adhesive tape 10, 12 comprises a lower masking layer 14 including an upper face 14a and a lower face 14b. The lower face 14b is covered by a first adhesive layer 16.

In figure 1, the adhesive tape 10 comprises a single upper masking layer 18 onto said lower masking layer 14.

The upper masking layer 18 includes an upper face 18a and a lower face 18b. The lower face 18b is applied onto the upper face 14a and linked thereto by means of a second adhesive layer 20.

In figure 2, the adhesive tape 12 comprises an upper masking layer 18 onto said lower masking layer 14, and also another upper masking layer or a top masking layer 22 onto said upper masking layer 18.

The top masking layer 22 includes an upper face 22a and a lower face 22b. The lower face 22b is applied onto the upper face 18a and linked thereto by means of a top adhesive layer 24.

Figures 3 to 4g show various cross sectional views of adhesive tapes. The cross section plane is perpendicular to the longitudinal direction of the tape.

Figure 3 illustrates an adhesive tape 26 according to the prior art which only comprises a single masking layer 26a and a single adhesive layer 26b, said adhesive layer 26b extending on the whole area of the lower face of the masking layer 26a.

Figures 4a to 4g illustrates various embodiments in accordance with the invention.

The adhesive tapes of figures 4a to 4c include two masking layers and illustrate embodiments of the roll of figure 1.

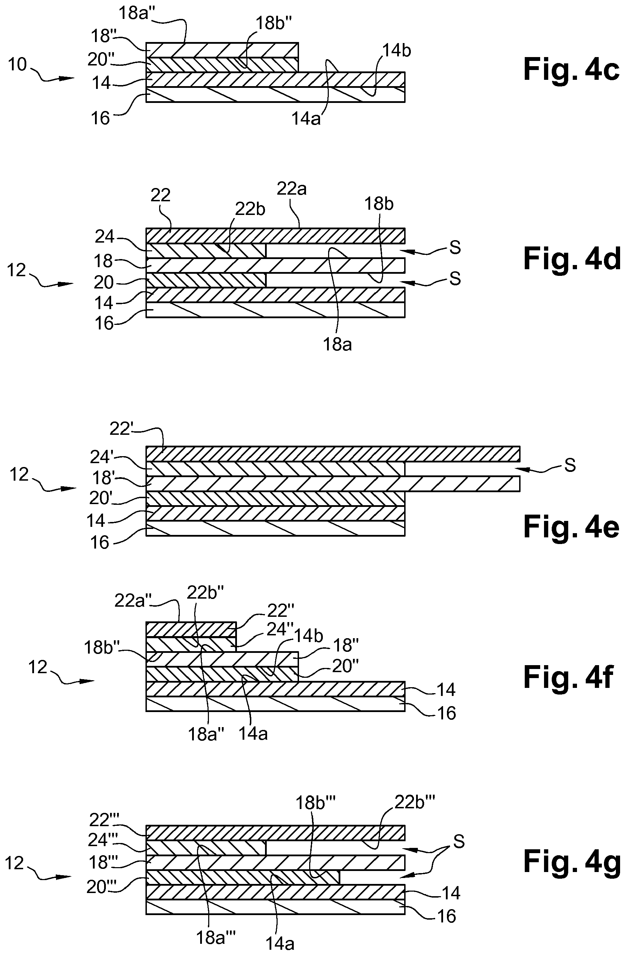

The adhesive tapes of figures 4d to 4g include three masking layers and illustrate embodiments of the roll of figure 2.

Figure 4a shows that the lower masking layer 14 and the first adhesive layer 16 are similar to the masking layer 26a and to the adhesive layer 26b of the adhesive tape 26 of figure 3.

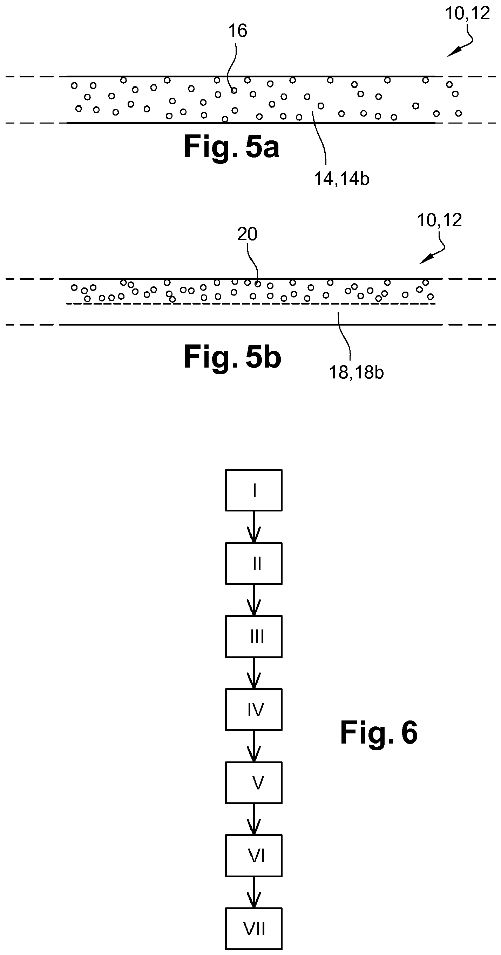

The first adhesive layer 16 extends on the whole area of the lower face 14b of the masking layer 14. The first adhesive layer 16 has therefore a width identical to the width of the masking layer 14, as shown in figure 4a and also in figure 5a. The adhesive layer 16 is in the form of a longitudinal strip extending along the masking tape 14. The longitudinal edges of the adhesive layer 16 are aligned with the longitudinal edges of the masking layer 14.

Figure 4a further shows that the upper masking layer 18 has a width which is similar or even identical to the width of the lower masking layer 14. The masking layers 14, 18 may be identical in terms of material and size. According to another embodiment, the masking layers 14, 18 may have identical size but may differ one another from their materials. For instance, the masking layer may have an opacity greater than the one of the masking layer 18. The masking layer 18 may be transparent or translucent.

The lower face 18b of the masking layer 18 is linked to the upper face 14a of the masking layer 14 by means of the second adhesive layer 20.

In the example shown, the second adhesive layer 20 extends in an area which is lower than the area of the upper face 14a and the area of the lower face 18b.

The second adhesive layer 20 has a width lower than the width of the masking layers 14, 18, as shown in figure 4a and also in figure 5b. The second adhesive layer 20 has also a width lower than the width of the first adhesive layer 16. The adhesive layer 20 is in the form of a longitudinal strip extending along the masking tapes 14, 18. One of the longitudinal edges of the adhesive layer 20 is aligned with the corresponding longitudinal edges of the masking layers 14, 18, and the opposite longitudinal edge of the adhesive layer 20 is remote from the corresponding opposite longitudinal edges of the masking layers 14, 18.

Even if the adhesive layers 16, 20 have not identical size, they can be made of the same material.

In the embodiment of figure 4b, the masking layer 14 and the adhesive layer 16 are similar to the ones of the embodiment of figure 4a.

Figure 4b shows that the upper masking layer 18' has a width which is greater than the width of the lower masking layer 14. The masking layers 14, 18' may differ in terms of material as specified above.

The lower face 18b' of the masking layer 18' is linked to the upper face 14a of the masking layer 14 by means of the second adhesive layer 20'.

In the example shown, the second adhesive layer 20' extends in an area which is identical to the area of the upper face 14a and which is lower than the area of the lower face 18b'.

The second adhesive layer 20' has a width identical to the width of the masking layer 14 and lower than the width of the masking layer 18'. The adhesive layers 16, 20' have similar or identical widths. The adhesive layer 20' is in the form of a longitudinal strip extending along the masking tapes 14, 18'. Both longitudinal edges of the adhesive layer 20' are aligned with the corresponding longitudinal edges of the masking layer 14. One of the longitudinal edges of the masking layer 18' is aligned with a longitudinal edge of the adhesive layer 20', and the opposite longitudinal edge of the masking layer 18' is remote from the corresponding opposite longitudinal edge of the adhesive layer 20'.

In the embodiment of figure 4c, the masking layer 14 and the adhesive layer 16 are similar to those of the embodiment of figure 4a.

Figure 4c shows that the upper masking layer 18" has a width which is lower than the width of the lower masking layer 14. The masking layers 14, 18' may differ in terms of material as specified above.

The lower face 18b" of the masking layer 18" is linked to the upper face 14a of the masking layer 14 by means of the second adhesive layer 20".

In the example shown, the second adhesive layer 20" extends in an area which is identical to the area of the lower face 18b" and which is lower than the area of the upper face 14a.

The second adhesive layer 20" has a width identical to the width of the masking layer 18" and lower than the width of the masking layer 14. The adhesive layer 20" has a width lower than the width of the adhesive layer 16. The adhesive layer 20" is in the form of a longitudinal strip extending along the masking tapes 14, 18". Both longitudinal edges of the adhesive layer 20" and of the masking layer 18" are aligned. One of the longitudinal edges of the masking layer 18" is aligned with a longitudinal edge of the adhesive layer 20" and is further aligned with longitudinal edges of the masking layer 14 and adhesive layer 16. The opposite longitudinal edges of the masking layer 18" and of the adhesive layer 20" are remote from the corresponding opposite longitudinal edges of the masking layer 14 and adhesive layer 16.

In the embodiment of figure 4d, the masking layers 14, 18 and the adhesive layers 16, 20 are similar to the ones of the embodiment of figure 4a.

The adhesive tape 12 includes another masking layer which is a top masking layer 22 as shown in figure 2. The top masking layer 22 includes an upper face 22a and a lower face 22b.

The lower face 22b of the masking layer 22 is linked to the upper face 18a of the masking layer 18 by means of a top adhesive layer 24.

In the example shown, the top adhesive layer 24 extends in an area which is lower than the area of the lower and upper faces 18a, 22b.

The top masking layer 22 has a width similar to the width of the masking layers 14, 18. The masking layers 14, 18, 22 may be identical or may differ in terms of material as specified above.

The adhesive layer 24 has a width identical to the width of the adhesive layer 20. The adhesive layer 24 is in the form of a longitudinal strip extending along the masking tapes 14, 18, 22. Both longitudinal edges of the adhesive layer 24 are aligned with the longitudinal ends of the adhesive layer 20. One of the longitudinal edges of the adhesive layer 24 is aligned with the longitudinal edges of the masking layers 14, 18, 22 and its opposite longitudinal edge is remote from the corresponding opposite longitudinal edges of the masking layers.

Then, the top masking layer 22 and the adhesive layer 24 are respectively similar to the upper masking layer 18 and the adhesive layer 20.

In the embodiment of figure 4e, the masking layers 14, 18' and the adhesive layers 16, 20' are similar to the ones of the embodiment of figure 4b. Moreover, the top masking layer 22' and the adhesive layer 24' are respectively similar to the upper masking layer 18' and the adhesive layer 20' of figure 4b.

In the embodiment of figure 4f, the masking layers 14, 18" and the adhesive layers 16, 20" are similar to the ones of the embodiment of figure 4c.

Figure 4f shows that the top masking layer 22" has a width which is lower than the width of the masking layer 18". The masking layers 14, 18", 22" may differ in terms of material as specified above.

The lower face 22b" of the masking layer 22" is linked to the upper face 18a" of the masking layer 18" by means of the top adhesive layer 24".

In the example shown, the adhesive layer 24" extends in an area which is identical to the area of the lower face 22b" and which is lower than the area of the upper face 18a".

The adhesive layer 24'" has a width identical to the width of the masking layer 22" and lower than the width of the masking layer 18". The adhesive layer 24" has a width lower than the width of the adhesive layer 20". The adhesive layer 24" is in the form of a longitudinal strip extending along the masking tapes 14, 18", 22". Both longitudinal edges of the adhesive layer 24" and of the masking layer 22" are aligned. One of the longitudinal edges of the masking layer 22" is aligned with a longitudinal edge of the adhesive layer 24" and is further aligned with longitudinal edges of the masking layer 14, 18" and adhesive layers 16, 20". The opposite longitudinal edges of the masking layer 22" and of the adhesive layer 24" are remote from the corresponding opposite longitudinal edges of the masking layers 14, 18" and adhesive layers 16, 20".

The last embodiment of figure 4g is similar to the embodiment of figure 4d and differs therefrom by the widths of the adhesive layers 20"', 24"'. The masking layers 14, 18"', 22'" may be identical or may differ in terms of material as specified above.

In the example shown, the adhesive layer 20'" extends in an area which is lower than the area of the lower and upper faces 14a, 18b"'. The top adhesive layer 24'" extends in an area which is lower than the area of the lower and upper faces 18a"', 22b"', and which is also lower than the width of the adhesive layer 20"'.

The adhesive layer 24'" is in the form of a longitudinal strip extending along the masking tapes 14, 18"', 22"'. One of the longitudinal edges of the adhesive layer 24'" is aligned with a longitudinal end of the adhesive layer 20"'. The other longitudinal edge of the adhesive layer 24'" is remote from the corresponding longitudinal end of the adhesive layer 20'"

The various embodiments show that the upper and/or top masking layer(s) may define a space S with an underneath masking layer. This space S is due to the fact that the lower face of each of said upper and/or top masking layer(s) is not fully coated to the underneath masking layer and is therefore not fully coated with adhesive. The space S allows an easier pealing off of the masking layer by an operator.

The invention further concerns a method schematically illustrated by figure 6.

The method for using the adhesive tape in accordance with the invention comprises at least five steps and may comprise two further steps. It only comprises five steps when the adhesive tape is as shown in figure 1 and comprises only two masking layers.

The five steps of the method are:
(i) sticking the adhesive tape onto a support, and in particular on a floor or a wall, by means of the first adhesive layer, said adhesive tape being used to define an area of the support to be coated by at least two successive coatings,
(ii) coating said area of the support with a first coating,
(iii) remove an uppermost masking layer of the tape,
(iv) coating said area of the support with a second coating, and
(v) remove an underneath masking layer of the tape.

The method may comprise two further steps when the adhesive tape is as shown in figure 2 and comprises three masking layers, these steps being:
(vi) coating said area of the support with a third coating, and
(vii) remove said lower masking layer of the tape.

Although specific embodiments of the present invention have been described, it will be appreciated that these are not limiting provided other embodiments fall within the scope of the claims.

## Claims

**1.** An adhesive tape (10, 12), in particular for use on floors or walls, said tape comprising a lower masking layer (14) including an upper face (14a) and a lower face (14b) which is covered by a first adhesive layer (16), **characterized in that** it further comprises at least one upper masking layer (18) onto said lower masking layer, said at least one upper masking layer including an upper face (18a) and a lower face (18b) which is linked to the upper face of said lower masking layer by means of a second adhesive layer (20), said second adhesive layer extending in an area which is lower than the area of the upper face of said lower masking layer and/or the area of the lower face of said upper masking layer.

**2.** The adhesive tape (10, 12) according to claim 1, wherein said second adhesive layer (20) extends in an area which is lower than the areas of the upper face (14a) of said lower masking layer (14) and of the lower face (18b) of said upper masking layer (18).

**3.** The adhesive tape (10, 12) according to claim 1 or 2, wherein said lower masking layer (14) and each of said at least one upper masking layer (18) have identical widths.

**4.** The adhesive tape (10, 12) according to any one of the preceding claims, wherein said lower masking layer (14) and said at least one upper masking layer (18) are identical.

**5.** The adhesive tape (10, 12) according to any one of the preceding claims, wherein said first and second adhesive layers (16, 20) have the same composition.

**6.** The adhesive tape (10, 12) according to any one of the preceding claims, wherein said first adhesive layer (16) extends on the whole area of the lower face (14b) of the lower masking layer (14).

**7.** The adhesive tape (10, 12) according to any one of the preceding claims, wherein said first and second adhesive layers (16, 20) are each in the form of a continuous strip, said second adhesive layer having a width lower than a width of the first adhesive layer and/or the lower masking layer (14) and/or said at least one upper masking layer (18).

**8.** The adhesive tape (10, 12) according to claim 7, wherein said second adhesive layer (20) extends along a first longitudinal edge of said at least one upper masking layer (18) and is remote from an opposite longitudinal edge of said at least one upper masking layer.

**9.** The adhesive tape (12) according to any one of the preceding claims, wherein it includes a top masking layer (22) onto said at least one upper masking layer (18), said top masking layer including an upper face (22a) and a lower face (22b) which is linked to the upper face (18a) of said at least one upper masking layer by means of a top adhesive layer (24), said top adhesive layer extending in an area which is lower than the area of the upper face of said at least one upper masking layer and/or the area of the lower face of said top masking layer.

**10.** The adhesive tape (12) according to claim 9, wherein each of said at least one upper masking layer (18) and said top masking layer (22) have identical widths.

**11.** The adhesive tape (12) according to claim 9 or 10, wherein each of said at least one upper masking layer (18) and said top masking layer (22) are identical.

**12.** The adhesive tape (12) according to any one of claims 9 to 11, wherein said first, second and top adhesive layers (16, 20, 24) are each in the form of a continuous strip, said top adhesive layer having a width lower than width(s) of the first and second adhesive layers and/or the lower masking layer (14) and/or said at least one upper masking layer (18).

**13.** The adhesive tape (12) according to claim 12, wherein said top adhesive layer (24) extends along a first longitudinal edge of said top masking layer (22) and is remote from an opposite longitudinal edge of said top masking layer.

**12.** The adhesive tape (12) according to any one of the claims 9 to 13 wherein said first, second and top adhesive layers (16, 20, 24) have the same composition.

**13.** The adhesive tape (10, 12) according to any one of the preceding claims, wherein it is in the form of a roll, said first adhesive layer (16) being in contact with an uppermost masking layer (18, 22) of the tape.

**14.** A method for using the adhesive tape (10, 12) according to any one of the preceding claims, wherein it comprises the steps of: (i) sticking the adhesive tape onto a support, and in particular on a floor or a wall, by means of the first adhesive layer (16), said adhesive tape being used to define an area of the support to be coated by at least two successive coatings, (ii) coating said area of the support with a first coating, (iii) remove an uppermost masking layer (18, 22) of the tape, (iv) coating said area of the support with a second coating, and (v) remove an underneath masking layer (14, 18) of the tape.

**15.** The method according to claim 14, wherein said adhesive tape (12) is used to define an area of the support to be coated by three successive coatings, and wherein it further includes the steps of: (vi) coating said area of the support with a third coating, and (vii) remove said lower masking layer (14) of the tape.
